(19) Europäisches Patentamt
European Patent Office
Office européen des brevets

(11) **EP 4 418 620 A1**

(12) **EUROPEAN PATENT APPLICATION**

(43) Date of publication:
**21.08.2024 Bulletin 2024/34**

(21) Application number: **24156937.5**

(22) Date of filing: **09.02.2024**

(51) International Patent Classification (IPC):
***H04L 41/5067*** (2022.01)      ***H04L 41/16*** (2022.01)

(52) Cooperative Patent Classification (CPC):
**H04L 41/5067;** H04L 41/16

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.02.2023  IN 202311010106**

(71) Applicant: **Sandvine Corporation**
**Waterloo, Ontario N2L 3V3 (CA)**

(72) Inventors:
• **MITTAL, Ambuj**
**560103 Bengaluru (IN)**
• **KULSHRESTHA, Vishal**
**560076 Bengaluru (IN)**

(74) Representative: **Ipey**
**Apex House**
**Thomas Street**
**Trethomas**
**Caerphilly CF83 8DP (GB)**

(54) **SYSTEM AND METHOD FOR DETERMINING APPLICATION QUALITY OF EXPERIENCE BASED ON APPLICATION AND CONTENT CATEGORIES**

(57)   A system and method for determining application quality of experience. The system includes: an application module configured to determine an application associated with a traffic flow; a content module configured to determine a content category associated with the traffic flow; a weighting module configured to determine a weight associated with each of the content categories associated with the traffic flow; and a processing module configured to determine an application quality of experience score with traffic flow. The method including: determining an application associated with a traffic flow; determining at least one content category associated with the application and the traffic flow; determining a weight associated with each content category associated with the traffic flow; and determining an application quality of experience score associated with the traffic flow.

**FIG. 1**

## Description

### RELATED APPLICATION

The present application claims priority to Indian Provisional Application No. 202311010106 filed February 15, 2023.

### FIELD

The present disclosure relates generally to computer network traffic. More particularly, the present disclosure relates to a system and method for determining application Quality of Experience (QoE) based on application and content categories in a computer network.

### BACKGROUND

Service Providers, including Internet Service Providers (ISP) as well as content providers, generally try to provide the best Quality of Service (QoS) to the largest number of users given network constraints. As more people access content via online networks and as users increase the amount of data used, congestion continues to grow. As such, various congestion control strategies have been used to attempt to improve the Quality of Service (QoS) and the Quality of Experience (QoE) for users on the network.

Users may experience various levels of QoE which may differ based on application and the content delivered by the application. Operators of computer networks try to provide high levels of QoE across various applications, but as applications may be able to provide a variety of different types of traffic flows, some traffic flows may be more affected by latency, loss, or other issues. Operators may wish to provide traffic management based on the type of content within the flow to allow for congestion management as well as maintain high levels of QoE across users.

As such, there is a need for an improved method and system for classifying the application and the content of a computer traffic flow.

The above information is presented as background information only to assist with an understanding of the present disclosure. No determination has been made, and no assertion is made, as to whether any of the above might be applicable as prior art with regard to the present disclosure.

### SUMMARY

In a first aspect, there is provided a system for determining application quality of experience, the system including: an application module configured to determine an application associated with a traffic flow; a content module configured to determine a content category associated with the traffic flow; a weighting module configured to determine a weight associated with each of the content categories associated with the traffic flow; and a processing module configured to determine an application quality of experience score for traffic flow based on the application, content and weighting associated with the traffic flow.

In some cases, the system includes a biasing factor module configured to determine a biasing factor for the traffic flow.

In some cases, the biasing factor module is configured to determine the biasing factor based on the number of negative occurrences within the traffic flow.

In some cases, a network Quality of Experience and an end-user Quality of Experience is determined by the processing module.

In some cases, the system includes a traffic action module configured to apply policies to the traffic flow based on the quality of experience score.

In some cases, the weighting module is configured to provide a weight for each content type based on how important the content category is for a user's QoE perception.

In some cases, the weighting module is configured to adjust the weights based on a user's length of use of each content category.

In some cases, the weighting module adjusts the weights periodically based on machine learning.

In another aspect, there is provided a method for determining application quality of experience, the method including: determining an application associated with a traffic flow; determining at least one content category associated with the application and the traffic flow; determining a weight associated with each content category associated with the traffic flow; and determining an application quality of experience score associated with the traffic flow based on the application, content and weighting associated with the traffic flow.

In some cases, the method further includes: determining a biasing factor for the traffic flow; and determining the application quality of experience based on the biasing factor.

In some cases, the biasing factor is based on the number of negative occurrences within the traffic flow.

In some cases, determining the application quality of experience includes determining a network Quality of Experience and an end-user Quality of Experience.

In some cases, the method further includes applying policies to the traffic flow based on the quality of experience score.

In some cases, determining the weight includes determining a content weight for each content type based on how important the content category is for a user's QoE perception.

In some cases, determining the weight includes adjusting the weight based on a user's length of use of each content category.

Other aspects and features of the present disclosure will become apparent to those ordinarily skilled in the art upon review of the following description of specific embodiments in conjunction with the accompanying figures.

**BRIEF DESCRIPTION OF FIGURES**

Embodiments of the present disclosure will now be described, by way of example only, with reference to the attached Figures.

Figure 1 illustrates a diagram of a computer network architecture including an embodiment of a system for determining application QoE based on application and content categories;

Figure 2 is a chart illustrating various applications associated with an application category;

Figure 3 is a chart illustrating various content categories per application category;

Figure 4 illustrates a system for determining application QoE based on application and content categories according to an embodiment;

Figure 5 is a flow chart of a method for determining application QoE based on application and content categories according to an embodiment;

Figure 6 is a diagram illustrating the flow through the network to determine QoE; and

Figure 7 is a sequence chart illustrating a method for determining application QoE according to an embodiment.

**DETAILED DESCRIPTION**

In the following, various example systems and methods will be described to provide example embodiment(s). It will be understood that no embodiment described below is intended to limit any claimed invention. The claims are not limited to systems, apparatuses or methods having all of the features of any one embodiment or to features common to multiple or all of the embodiments described herein. A claim may include features taken from any embodiment as would be understood by one of skill in the art. The applicants, inventors or owners reserve all rights that they may have in any invention disclosed herein, for example the right to claim such an invention in a continuing or divisional application and do not intend to abandon, disclaim or dedicate to the public any such invention by its disclosure in this document.

Generally, the present disclosure provides a method and system of determining application Quality of Experience (QoE) based on the application and content categories. Embodiments of the system and method are intended to determine weights associated with different content categories of each application. In some cases, the system further determines the importance of a particular content category to the end-user. The system and method are configured to monitor traffic flows and determine the QoE for each content category of an application traffic flow. In determining the network application QoE the system determines the duration of the content category and the QoE associated with each content category. For an end-user application QoE, the system further considers biasing events and the individualized importance of each content category in determining an overall QoE.

In determining Quality of Experience (QoE) of an application, there are various factors that need to be considered. In some cases, the QoE of an application depends on, for example, throughput, latency, pattern of data transfer, reactivity of network to sudden burst demand, and the like. However, when one application carries various types of content, the overall experience of a user could depend on these types of contents. The user's experience may vary based on what user activity was performed on the application. The QoE cannot be validated directly on network parameters without taking into account the type of content it is carrying. This can only be done if the type of content is known or can be recognized. Embodiments of the system and method detailed herein are configured to determine the Application's QoE by taking its content categories into consideration.

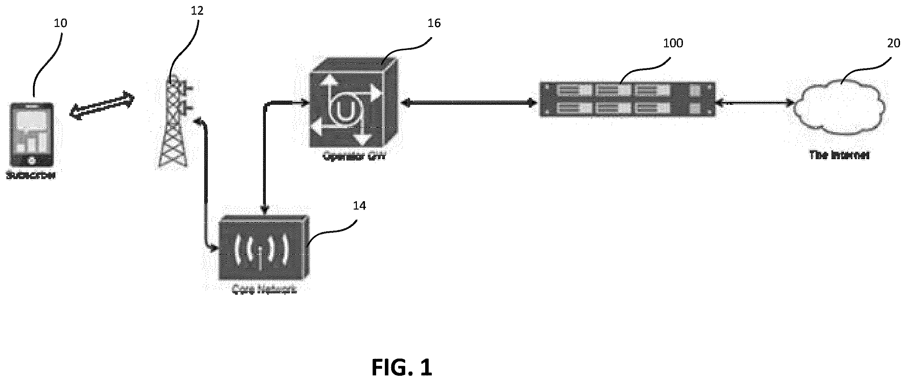

Figure 1 illustrates an environment for an embodiment of the system. A subscriber, using a user device 10, initiates a traffic flow with a base station 12. The traffic flow is transmitted to and from a core network 14 from the base station. The traffic flow is seen and directed by the operator network 16 and reviewed and classified by a system 100 for determining application and content Quality of Experience (QoE). The system 100 may be included as a component of a network device which resides between the operator's gateway and the Internet 20. The system 100 is intended to reside within the operator's or Internet Service Provider's (ISP's) network 16. It will be understood that embodiments of the system and method detailed herein are intended to be employed over any type of computer network, for example, fixed line, mobile, satellite, or other computer network.

The system 100 is configured to be transparent to users. It will be understood that figure 1 illustrates a high-level network architecture and that a computer network may include further aspects not illustrated.

The system 100 for determining application QoE is intended to reside in the core network. In particular, the system 100 is intended to be in a location where the system is able to access the data noted herein. It will be understood that in some cases the system may be a physical network device or may be a virtual network device. The system may also be distributed over a number of physical or virtual devices. It will be understood that the system may be used on any IP based networking system, for example, Wi-Fi based, mobile data networks like GPRS, CDMA, 4G, 5G, LTE, satellite based, WLAN based networks, fixed line broadband fiber optic networks as well as on virtual private networks.

Generally, the QoE of an application can be determined at two places. The first bring the Application Server which can be configured to measure the QoE. For example, Netflix can put logic on both the client and server side to determine how the Netflix application is performing. The second place to determine the QoE of an application is an application recognition engine that is placed in the path of the data and is configured to measure QoE.

Embodiments of the system and method detailed herein are intended to use Application recognition. Embodiment of the system and method are configured to measure QoE of various applications. The system and method are intended to measure QoE in a transparent manner. For example, if YouTube and Netflix describe their QoE values, their individual interpretation of QoE may be different. With the system and method detailed herein using an Application Recognition engine, the system and method are intended to measure applications in the same category using the same yard stick (method). This is intended to allow the results between and among applications to be compared.

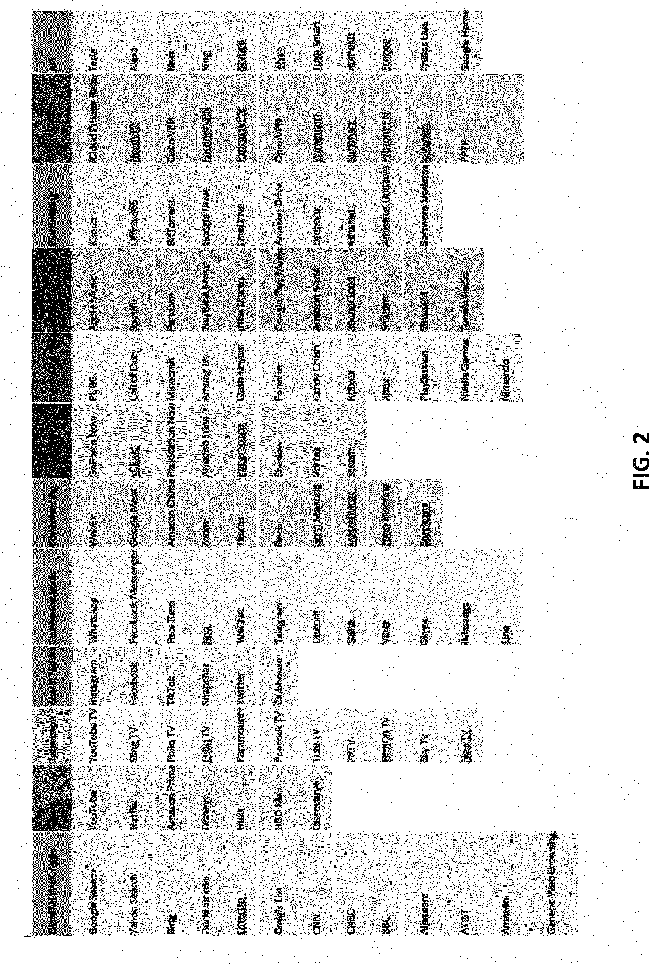

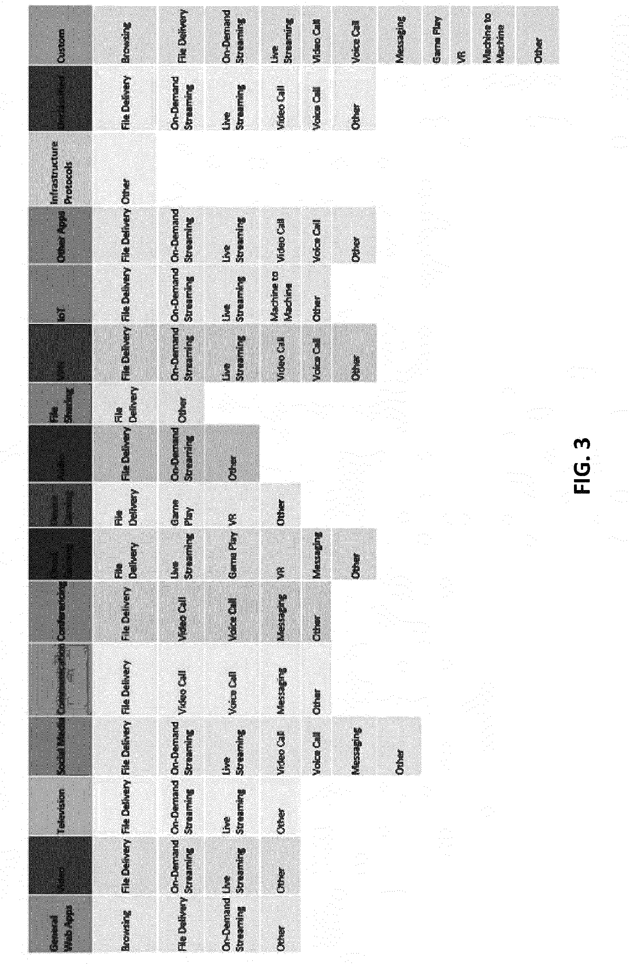

QoE of an application depends on two things: the Type / Category of application and the Type of content / traffic that the application carries. Figure 2 is a chart illustrating general application categories and associated applications. Figure 3 is a chart illustrating general application categories and their associated content categories. It will be understood that this is illustrated as an example only and other applications, application categories and content categories can be included.

The type of application, or application category, determines the primary purpose of application, which is likely to be significant in determining the QoE. The type of content determines what is the actual QoE. In a specific example, in a Netflix application, if user browses for a minute and then plays a movie, then the overall score is most likely driven by the QoE of the movie. If he however, only browsed various categories, and did not play any of them, then the score is determined based on web browsing and not video streaming. Then, as part of browsing, if a preview is also being played, then the QoE depends on both browsing and streaming video for the preview. If videos work fine, but browsing is slow, the user will experience poor QoE.

Further, the impact on user perception of QoE for the same content category may be different across applications.

There are two types of QoE measurements that are defined in the present disclosure:

• Application's Network QoE
• Application's End User QoE

Application's Network QoE is determined purely by the network characteristics of data transfer. Application's Network QoE is intended to indicate a measure of how good or bad the network is doing to service the application. A correct determination here benefits from the QoE being calculated per content category. This would not be the same as Quality of Service (QoS). In the case of QoS, it is purely the network parameters that are reviewed. Whereas in case of QoE, the application for which QoE is being calculated is also considered.

Application's End User QoE is calculated based on how a subscriber/user perceives the QoE of an application. This is dependent on Network QoE, and is influenced by different content categories, but there would be other factors involved as well, for example, time of use of content category, importance of content category in the experience, and like factors.

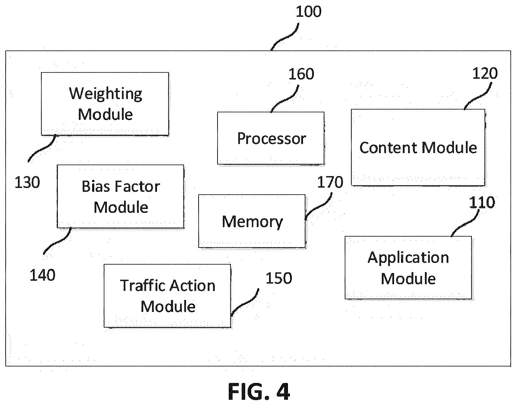

Figure 4 illustrates an embodiment of a system for determining QoE based on application and content categories. The system is intended to include an application module 110, a content module 120 a weighting module 130 a bias factor module 140, a traffic action module 150, at least one processor 160 and at least one memory component 170. The system is generally intended to be distributed and reside in the data plane. A central processing unit or the control processor is configured to execute the instructions stored in the memory component in order for the modules to execute their functions.

The application module 110 is configured to identify the application of a traffic flow using application recognition. Further the content module 120 is configured to determine the content category associated with the traffic flow using content recognition.

The weighting module 130 is configured to determine the importance or weight of a particular type of content for each application. It will be understood that the browsing of a Netflix application may be of lower weight or importance to a long duration use of Netflix when it may be of higher importance with a shorter duration of use. The weighting module 130 is configured to have previously determined weights per content type per application. The weightings of each content type per application is intended to be be verified at periodic time intervals based on machine learning.

The bias factor module 140 is configured to determine biasing events associated with a traffic flow as defined herein. There are some events that may be of short duration but may degrade a user's perception of the QoE based on the event. The bias factor module 140 is configured to determine these events and determine how these events have affected a user's Application QoE.

A traffic action module 150 is configured to determine whether there are any policies that are to be applied if it is determined that the QoE is below a predetermined interval.

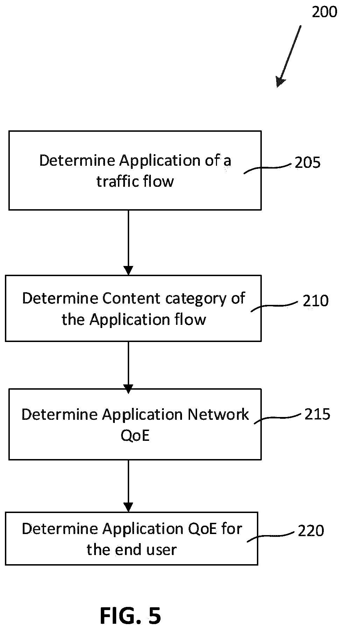

Figure 5 illustrates a method 200 for determining Application QoE based on Application and content categories. The application module 110 is configured to identify the application of a traffic flow using Application recognition, at 205. The content module 120 is configured to determine the content category associated with the traffic flow, at 210, based on the category determined by the application module. The system is then configured to determine a standalone QoE of the individual content categories based on methods specific to determining QoE for that content category. The system then determines an Application Network QoE at 215 and an Application QoE for the end user at 220.

To determine a network QoE of an Application the system does not take user perception of QoE into consideration. The network QoE is defined as how the network is performing at that point in tome. The network QoE is intended to be a weighted average of the QoE of the content categories where weights are the duration of use of each content category.

To determine an end user's QoE for an application, the system is configured to consider the application and the various content categories that the application uses. The QoE of various content categories are combined at various weights. The weights are determined based on how important the content category is for the user's QoE perception. The duration of use, timing of use and method of use are also factors that influence the end user's QoE.

The bias factor module is configured to determine a number of times a bad event or negative occurrence was perceived during the period of use. This bias factor is an additional factor used to determine user's QoE. The user's exposure to a good network is another factor. In different geographies, the quality of network varies. If a subscriber is generally used to a good experience, any degrade is an immediate mental perception on QoE degrade.

The network QoE of an application can be defined as:

$$AppNWQoE = \frac{\sum_{c=1}^{N} Qc * Dc}{\sum_{c=1}^{N} Dc}$$

Where the weight being used is Dc, defined as the duration of use of category C, Qc = QoE of the category C. As can be seen in charts in figure 2 and 3, not all categories are applicable for an application and therefore, therefore, C (1 .. N) consists of categories that are applicable to an application.

The End User QoE of an application can be defined as:

$$AppEUQoE = \frac{\sum_{c=1}^{N} Qc * Dc * Ic * Bc}{\sum_{c=1}^{N} Dc * Ic}$$

Where Qc = QoE of the category C, the weighs being used are Dc, defined as the duration of use of category C, and Ic defined as the importance of content category C, and BC defined as Event Bias. Event Bias is a factor that would reduce the QoE due to occurrence of Bad QoE events in the content categories. As can be seen in figures 2 and 3, not all content categories are applicable for an application and therefore, therefore, C (1 ... N) consists of content categories that are applicable to an application.

The following method is an example method that may be used to derive the weights of individual categories. In this example, a test is run where all categories perform well. An explicit degrade is carried out on content categories one by one. User perception is recorded in each case on a scale of 1 to 10 (or any arbitrary usable scale). The weights are determined proportional to users QoE perception for each case. The experiment is repeated for multiple users and the weights are normalized as an average. Ic is determined as relative weights of each content category normalized.

The following is an example method that may be used to determine the bias factor. A bad QoE event is carried out by changing network characteristics in controlled test environment. A plurality of occurrences is carried out in the application, for example, evenly spread out, randomly or the like. Users' perception of QoE degrade is recorded. A BiasFactor, in this example, is intended to be the ratio of degraded QoE to non degraded QoE. In a specific example, if usually the QoE was averaged to 4.5, and due to bad QoE events, it was 3, then the BiasFactor is considered as 3 / 4.5 normalized by number of events Ne by taking N'th root of 3 / 4.5. Event Bias is then be calculated as BiasFactor ^ NumBadEvents.

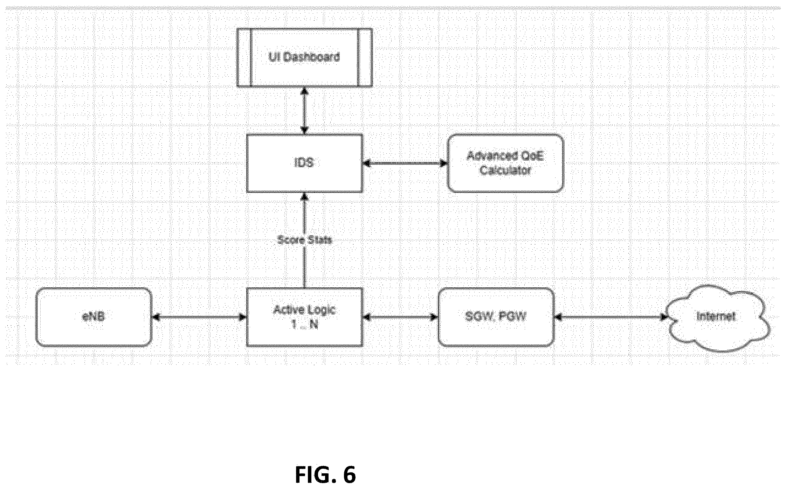

Figure 6 illustrates a deployment of the system and the flow of information. The system, via for example, application recognition or an active logic module is configured to provide for application classification and content category classification. The system is also configured to provide the relevant statistics to an internal data system that would be useful for calculating QoE. Advanced QoE methods may run periodically or on every report depending on configuration. The system is further configured to determine the QoE per content category periodically or on every report. In some cases, a user interface (UI) may provide insights or a dashboard that can be used to view the QoE of the network, location, an individual or group of subscribers, or like breakdowns.

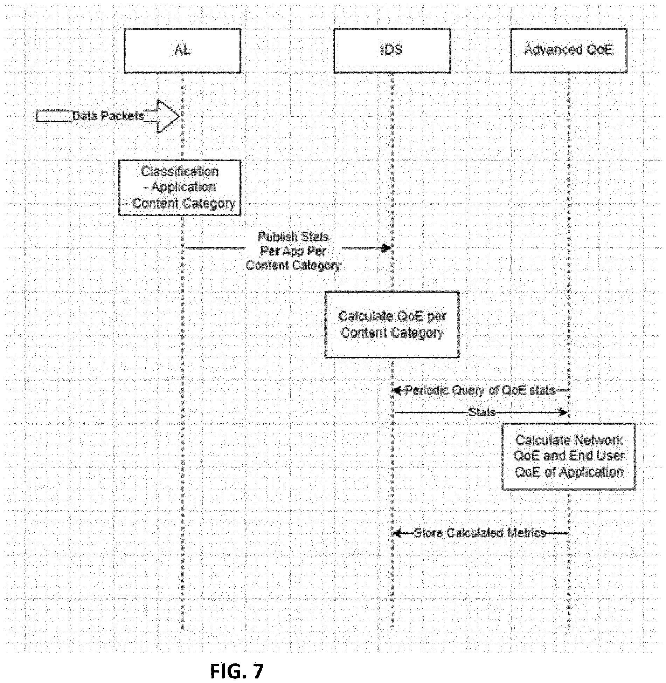

A high-level sequence chart of a specific example is shown in figure 7. Data packets are continuously processed in the system using Active Logic (AL). On detecting a new flow, the application module identifies the application contained in the traffic flow. For the duration of the flow, the content categories are recognized, via the content module. Relevant stats for application and content categories are published to an internal data system associated with the content module. The system periodically calculates QoE per Content Category and per Application. Periodically, the system determines the network QoE and End user QoE of the application.

In the preceding description, for purposes of explanation, numerous details are set forth in order to provide a thorough understanding of the embodiments.

However, it will be apparent to one skilled in the art that these specific details may not be required. In other instances, well-known structures may be shown in block diagram form in order not to obscure the understanding. For example, specific details are not provided as to whether the embodiments or elements thereof described herein are implemented as a software routine, hardware circuit, firmware, or a combination thereof.

Embodiments of the disclosure or elements thereof can be represented as a computer program product stored in a machine-readable medium (also referred to as a computer-readable medium, a processor-readable medium, or a computer usable medium having a computer-readable program code embodied therein). The machine-readable medium can be any suitable tangible, non-transitory medium, including magnetic, optical, or electrical storage medium including a diskette, compact disk read only memory (CD-ROM), memory device (volatile or non-volatile), or similar storage mechanism. The machine-readable medium can contain various sets of instructions, code sequences, configuration information, or other data, which, when executed, cause a processor to perform steps in a method according to an embodiment of the disclosure. Those of ordinary skill in the art will appreciate that other instructions and operations necessary to implement the described implementations can also be stored on the machine-readable medium. The instructions stored on the machine-readable medium can be executed by a processor or other suitable processing device and can interface with circuitry to perform the described tasks.

The above-described embodiments are intended to be examples only. Alterations, modifications and variations can be effected to the particular embodiments by those of skill in the art without departing from the scope, which is defined solely by the claims appended hereto.

**Claims**

1. A system for determining application quality of experience comprising:

    an application module configured to determine an application associated with a traffic flow;
    a content module configured to determine a content category associated with the traffic flow;
    a weighting module configured to determine a weight associated with each of the content categories associated with the traffic flow; and
    a processing module configured to determine an application quality of experience score for traffic flow based on the application, content and weighting associated with the traffic flow.

2. The system of claim 1 further comprising a biasing factor module configured to determine a biasing factor for the traffic flow.

3. The system of claim 2 wherein the biasing factor module is configured to determine the biasing factor based on the number of negative occurrences within the traffic flow.

4. The system of claim 1 wherein a network Quality of Experience and an end-user Quality of Experience is determined by the processing module.

5. The system of claim 1 further comprising a traffic action module configured to apply policies to the traffic flow based on the quality of experience score.

6. The system of claim 1 wherein the weighting module is configured to provide a weight for each content type based on how important the content category is for a user's QoE perception.

7. The system of claim 1 wherein the weighting module is configured to adjust the weights based on a user's length of use of each content category.

8. The system of claim 1 wherein the weighting module adjusts the weights periodically based on machine learning.

9. A method for determining application quality of experience comprising:

    determining an application associated with a traffic flow;
    determining at least one content category associated with the application and the traffic flow;
    determining a weight associated with each content category associated with the traffic flow; and
    determining an application quality of experience score associated with the traffic flow based on the application, content and weighting associated with the traffic flow.

10. The method of claim 9 further comprising:

    determining a biasing factor for the traffic flow; and
    determining the application quality of experience based on the biasing factor.

11. The method of claim 10 determining the biasing factor is based on the number of negative occurrences within the traffic flow.

12. The method of claim 9 wherein determining the application quality of experience comprises determining a network Quality of Experience and an end-user Quality of Experience.

13. The method of claim 9 further comprising applying policies to the traffic flow based on the quality of experience score.

14. The method of claim 9 wherein determining the weight comprises determining a content weight for each content type based on how important the content category is for a user's QoE perception.

15. The method of claim 9 wherein determining the weight comprises adjusting the weight based on a user's length of use of each content category.

FIG. 1

EP 4 418 620 A1

| General Web Apps | Video | Television | Social Media | Communication | Conferencing | Cloud Gaming | Device Gaming | Audio | File Sharing | VPN | IoT |
|---|---|---|---|---|---|---|---|---|---|---|---|
| Google Search | YouTube | YouTube TV | Instagram | WhatsApp | WebEx | GeForce Now | PUBG | Apple Music | iCloud | iCloud Private Relay | Tesla |
| Yahoo Search | Netflix | Sling TV | Facebook | Facebook Messenger | Google Meet | xCloud | Call of Duty | Spotify | Office 365 | NordVPN | Alexa |
| Bing | Amazon Prime | Philo TV | TikTok | FaceTime | Amazon Chime | PlayStation Now | Minecraft | Pandora | BitTorrent | Cisco VPN | Nest |
| DuckDuckGo | Disney+ | Fubo TV | Snapchat | imo. | Zoom | Amazon Luna | Among Us | YouTube Music | Google Drive | FortinetVPN | Ring |
| OfferUp | Hulu | Paramount+ | Twitter | WeChat | Teams | PaperSpace | Clash Royale | iHeartRadio | OneDrive | ExpressVPN | Skybell |
| Craig's List | HBO Max | Peacock TV | Clubhouse | Telegram | Slack | Shadow | Fortnite | Google Play Music | Amazon Drive | OpenVPN | Wyze |
| CNN | Discovery+ | Tubi TV | | Discord | Goto Meeting | Vortex | Candy Crush | Amazon Music | Dropbox | Wireguard | Tuya Smart |
| CNBC | | PPTV | | Signal | MasterMost | Steam | Roblox | SoundCloud | 4shared | Surfshark | HomeKit |
| BBC | | FilmOn Tv | | Viber | Zoho Meeting | | Xbox | Shazam | Antivirus Updates | ProtonVPN | Ecobee |
| Aljazeera | | Sky Tv | | Skype | Blueleans | | PlayStation | SiriusXM | Software Updates | IpVanish | Phillips Hue |
| AT&T | | NowTV | | iMessage | | | Nvidia Games | TuneIn Radio | | PPTP | Google Home |
| Amazon | | | | Line | | | Nintendo | | | | |
| Generic Web Browsing | | | | | | | | | | | |

**FIG. 2**

FIG. 3

**FIG. 4**

EP 4 418 620 A1

```
              200

Determine Application of a          205
        traffic flow

Determine Content category of       210
      the Application flow

Determine Application Network       215
             QoE

Determine Application QoE for       220
        the end user
```

**FIG. 5**

EP 4 418 620 A1

**FIG. 6**

**FIG. 7**

Europäisches
Patentamt

European
Patent Office

Office européen
des brevets

# EUROPEAN SEARCH REPORT

**Application Number**

EP 24 15 6937

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/124141 A1 (RAMANUJAM SRINIDHI CHAKRAVARTHY [IN] ET AL) 21 April 2022 (2022-04-21) * paragraph [0008] - paragraph [0015] * * paragraph [0042] - paragraph [0047] * * paragraph [0052] * * paragraph [0078] - paragraph [0079] * * paragraph [0084] * * paragraph [0091] - paragraph [0092] * * paragraph [0105] - paragraph [0115] * * paragraph [0137] * * paragraph [0152] - paragraph [0153] * * paragraph [0166] * | 1-15 | INV. H04L41/5067 H04L41/16 |
| X | US 2015/082345 A1 (ARCHER MICHAEL [CA] ET AL) 19 March 2015 (2015-03-19) * paragraph [0029] - paragraph [0032] * * paragraph [0047] - paragraph [0052] * * paragraph [0063] * * paragraph [0083] * * paragraph [0089] - paragraph [0098] * * paragraph [0135] - paragraph [0137] * * paragraph [0157] * * paragraph [0172] * | 1-7,9-15 | |
| X | EP 3 920 487 A1 (SANDVINE CORP [CA]) 8 December 2021 (2021-12-08) * paragraph [0053] - paragraph [0056] * * paragraph [0064] * * paragraph [0071] - paragraph [0075] * * paragraph [0084] - paragraph [0086] * * paragraph [0100] - paragraph [0103]; figure 3 * | 1,2,8-10 | |

**TECHNICAL FIELDS SEARCHED (IPC)**

H04L
H04N

The present search report has been drawn up for all claims

| Place of search | Date of completion of the search | Examiner |
|---|---|---|
| Munich | 29 May 2024 | Camba, Sonia |

EPO FORM 1503 03.82 (P04C01)

## ANNEX TO THE EUROPEAN SEARCH REPORT
## ON EUROPEAN PATENT APPLICATION NO.

EP 24 15 6937

This annex lists the patent family members relating to the patent documents cited in the above-mentioned European search report.
The members are as contained in the European Patent Office EDP file on
The European Patent Office is in no way liable for these particulars which are merely given for the purpose of information.

29-05-2024

| Patent document cited in search report | | Publication date | Patent family member(s) | | Publication date |
|---|---|---|---|---|---|
| US 2022124141 | A1 | 21-04-2022 | CA | 3132483 A1 | 15-04-2022 |
| | | | EP | 3985984 A1 | 20-04-2022 |
| | | | US | 2022124141 A1 | 21-04-2022 |
| | | | US | 2023156068 A1 | 18-05-2023 |
| US 2015082345 | A1 | 19-03-2015 | NONE | | |
| EP 3920487 | A1 | 08-12-2021 | CA | 3121070 A1 | 04-12-2021 |
| | | | EP | 3920487 A1 | 08-12-2021 |
| | | | US | 2021385137 A1 | 09-12-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202311010106